(19) Europäisches Patentamt

European Patent Office

Office européen des brevets

(11) Veröffentlichungsnummer: **0 233 508 B1**

(12) **EUROPÄISCHE PATENTSCHRIFT**

(45) Veröffentlichungstag der Patentschrift: **12.08.92**

(21) Anmeldenummer: **87100918.9**

(22) Anmeldetag: **23.01.87**

(51) Int. Cl.⁵: **F16D 43/20**, F16D 43/21

(54) Schaltbare und selbsttätig abschaltbare Überlastkupplung, insbesondere für Handwerkzeuge.

(30) Priorität: **06.02.86 DE 3603672**

(43) Veröffentlichungstag der Anmeldung:
**26.08.87 Patentblatt 87/35**

(45) Bekanntmachung des Hinweises auf die
Patenterteilung:
**12.08.92 Patentblatt 92/33**

(84) Benannte Vertragsstaaten:
**DE FR GB IT SE**

(56) Entgegenhaltungen:
**WO-A-85/02661**
**DE-C- 2 709 946**
**US-A- 2 401 992**
**US-A- 3 252 553**

(73) Patentinhaber: **Dischler, Helmut, Dipl.-Ing.**
**Droste-Hülshoff-Strasse 9**
**W-4040 Neuss-Uedesheim(DE)**

(72) Erfinder: **Dischler, Helmut, Dipl.-Ing.**
**Droste-Hülshoff-Strasse 9**
**W-4040 Neuss-Uedesheim(DE)**

(74) Vertreter: **Paul, Dieter-Alfred, Dipl.-Ing.**
**Fichtestrasse 18**
**W-4040 Neuss 1(DE)**

Rank Xerox (UK) Business Services

## Beschreibung

Die Erfindung betrifft eine schaltbare und selbsttätig abschaltende Überlastkupplung, insbesondere für Handwerkzeuge zum Pressen, Schneiden oder dergleichen.

Aus der DE-C-27 09 946 ist eine Kupplung bekannt, die als Reibungskupplung ausgebildet ist und zwei Kupplungshälften aufweist, von denen die eine relativ zur anderen gegen Federwirkung verschieblich ist und mit der anderen gekuppelt werden kann, mit einer Grenzlastsicherung, die bei Auslösen bei Grenzlast eine Axialverschiebung der Kupplungshälften gegeneinander ermöglicht.

Die Kupplungen der obengenannten Art unterliegen Einflüssen, die einerseits vom Antrieb, insbesondere aber auch von den an den Abtrieb angeschlossenen Werkzeugen ausgehen und die die Abschaltgenauigkeit der Kupplungen negativ beeinflussen können. Hierbei handelt es sich sowohl um auf die Kupplungen antriebsseitig und besonders abtriebsseitig einwirkende kurzfristige Drehmomentschwankungen, wie auch um auf die Kupplungen einwirkende Axialkräfte. Diese Einwirkungen, die man auch als Vibrationen bezeichnen kann, haben zur Folge, daß die Abschaltung der Kupplungen innerhalb eines unerwünscht großen Fehlerbereiches erfolgen kann. Dies hat einerseits ein zu häufiges Abschalten der Kupplung und damit deren Abnutzung zur Folge und andererseits eine Erhöhung der zur Wirksamkeit des Werkzeuges erforderlichen Arbeitszeit.

Der Erfindung liegt die Aufgabe zugrunde, eine Kupplung zu schaffen, die einfach aufgebaut ist, kostensparend hergestellt werden kann, die eine langdauernde Haltbarkeit aufweist und die stets und zuverlässig bei dem vorbestimmten Drehmoment bzw. der vorbestimmten Grenzlast abschaltet.

Gegenstand der Erfindung ist eine schaltbare und selbsttätig abschaltende Überlastkupplung, insbesondere für Handwerkzeuge zum Pressen, Schneiden oder dergleichen, wobei die Kupplung eine Reibungskupplung ist und zwei Kupplungshälften aufweist, von denen die eine relativ zur anderen gegen Federwirkung verschieblich ist und mit der anderen gekuppelt werden kann mit einer Grenzlastsicherung, die bei Auslösen bei Grenzlast eine Axialverschiebung der Kupplungshälften gegeneinander ermöglicht und die dadurch gekennzeichnet ist, daß eine Kupplungshälfte auf einem Kupplungsträger begrenzt drehbar angeordnet ist, wobei an der Kupplungshälfte, in deren Umfangsbereich eine oder mehrere Federn angeordnet sind, die in ihrer Ruhestellung mit dem Kupplungsträger in formschlüssiger Verbindung stehen, die bei Erreichen der Grenzlast gelöst wird, so daß die Kupplungshälfte gegenüber dem Kupplungsträger begrenzt drehbar wird und wobei an dem Kupplungsträger oder der Kupplungshälfte eine oder mehrere durch Verdrehen dieser Teile gegeneinander auslösbare Sperren angeordnet sind, die im ausgelösten Zustand die Trennung der Kupplungshälften erlauben.

Bei der Kupplung gemäß der Erfindung bleiben axiale Krafteinwirkungen auf die Kupplung, wie sie bei den meisten an die Kupplung angeschlossenen Werkzeugen auftreten, sei es, daß es sich bei den Werkzeugen um Bohrer, Schneidwerkzeuge oder Presswerkzeuge handelt, ohne Einfluß auf den Abschaltzeitpunkt der Kupplung. Die vom Drehmoment oder grenzwertabhängige Abschaltung der Kupplung erfolgt bei dem genau definierten Wert und nicht etwa infolge der Addition vorausgegangener, den Grenzwert unterschreitenden Spitzen dieser Werte.

Bei einer bevorzugten Ausführungsform der Kupplung gemäß der Erfindung sind die Federn als Biegeblattfedern ausgebildet und in radialer Richtung zur Kupplungsachse elastisch verformbar. Hierdurch läßt sich eine besonders genaue Abschaltung der Kupplung erreichen.

Die Federn können die Form von Hohlzylinder-Segmenten aufweisen und insbesondere einstückig mit der Kupplungshälfte sein. Bei dieser Ausbildung wird nicht nur eine besonders genaue Abschaltung erreicht sondern auch eine besonders einfache Ausbildung der Kupplung.

Die Federn können außer in Richtung zur Kupplungsachse auch in Achsrichtung der Kupplung elastisch verformbar sein, wodurch sich der Mechanismus zum Abschalten der Kupplung vereinfachen läßt.

Bei einer bevorzugten Ausführungsform der Kupplung gemäß der Erfindung ist zwischen Kupplungshälfte und Kupplungsträger ein Kugellager, insbesondere ein reibungsarmes Kugellager angeordnet. Hierdurch wird die begrenzte Verdrehung der Kupplungshälfte gegen den Kupplungsträger erleichtert.

Weiterhin ist es zweckmäßig, daß an der Feder ein sich in axialer Richtung erstreckendes Widerlager angeordnet ist, das mit einer oder mehreren Ausnehmungen auf den Umfang des Kupplungsträgers zusammenwirkt. Diese Ausbildung hat zur Folge, daß die Kupplung, unabhängig von vorangegangenen axialen Stößen und unabhängig von vorangegangenen Drehmoment- oder Grenzwert-Unterschreitungen, die das vorgegebene Maß fast erreichen, erst dann abschaltet, wenn diese Werte tatsächlich überschritten sind, ohne daß eine vorhergehende Addition dieser Werte stattfindet.

Bei einer zweckmäßigen Ausführungsform dienen als Sperren am Kupplungsträger schwenkbar befestigte Hebel, die mit einer Ausnehmung in der den Kupplungsträger tragenden Welle zusammenwirken und deren freie Enden sich in Bohrungen auf dem Umfang der Kupplungshälfte erstrecken. Durch diese Ausbildung wird das Auslösen der Kupplung unter den vorstehend beschriebenen Bedingungen, aber nur unter diesen, bewirkt.

Die Kupplung gemäß der Erfindung hat insbesondere den Vorteil, daß der Überlastteil der Kupplung von deren Abschaltteil getrennt ist. Der Überlastteil arbeitet weitestgehend unabhängig vom Abschaltteil und löst die Abschaltung erst dann aus, wenn auch tatsächlich alle Kriterien erreicht sind, die das Abschalten der Kupplung erfordern, nicht aber schon vorher infolge von einzelnen Einflüssen.

Ausführungsbeispiele einer Kupplung gemäß der Erfindung sind im folgenden anhand der Zeichnung dargestellt. Hierbei zeigt

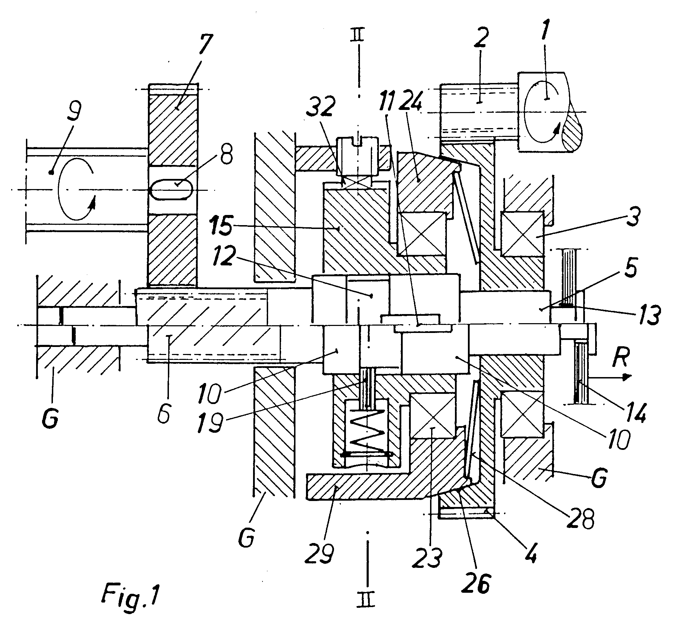

Figur 1     einen Längsschnitt durch die Kupplung, oben in der Bereitschaftsstellung vor dem Einkuppeln und im unteren Teil des Schnittes im eingekuppelten Zustand.

Figur 2     zeigt einen Schnitt nach der Linie II-II der Figur 1, also sowohl in der Bereitschaftsstellung als auch im eingekuppelten Zustand.

Figur 3     zeigt im Längsschnitt die Kupplung im abgeschalteten Zustand. Der obere Teil der Figur 3 enthält eine Änderung gegenüber den vorstehend genannten Figuren.

Figur 4     zeigt einen Schnitt nach der Linie IV-IV der Figur 3.

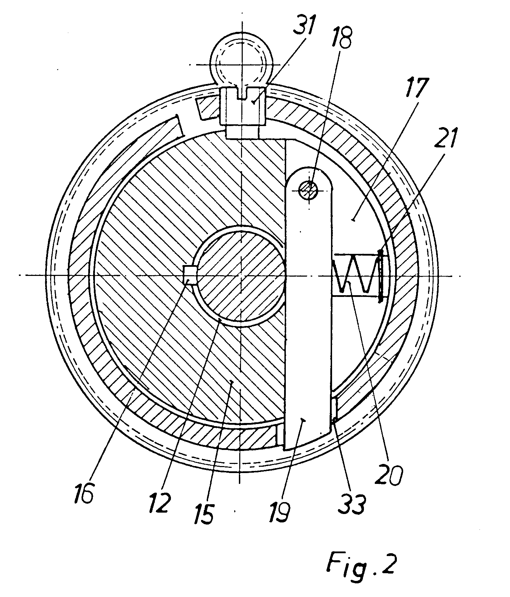

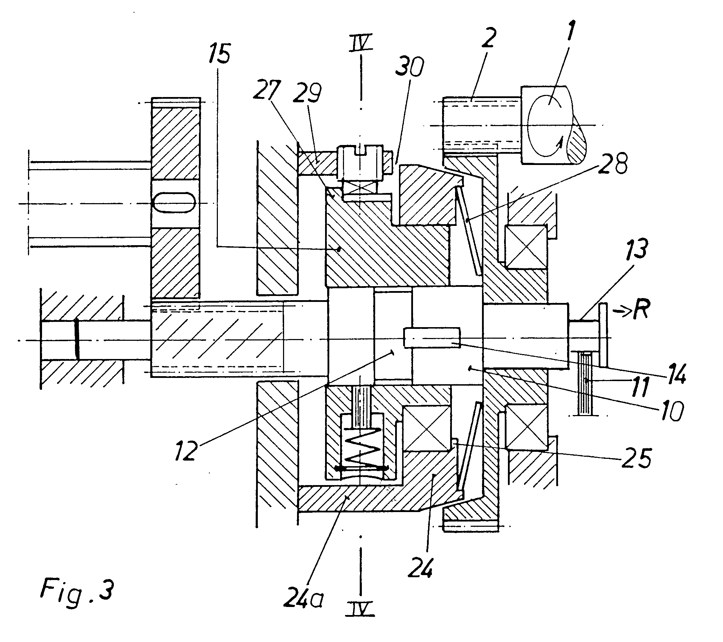

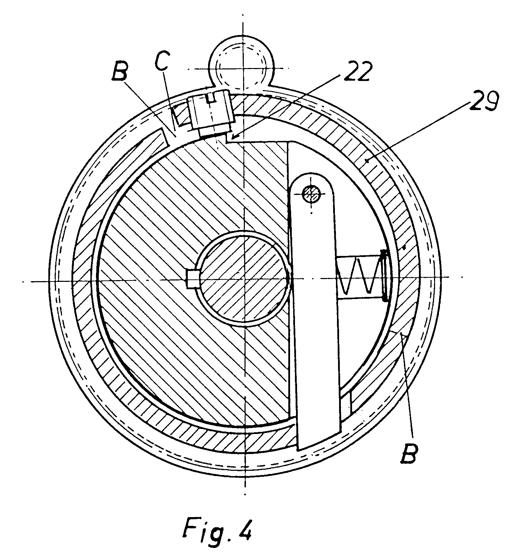

Die in der Zeichnung dargestellte Kupplung ist in ein Werkzeug eingebaut, dessen Gehäuse in der Zeichnung nur unvollständig dargestellt ist. Diejenigen Teile, die zur Lagerung der Kupplung dienen, sind in der Zeichnung mit G bezeichnet. Ein ebenfalls nicht dargestellter Antriebsmotor treibt über eine Welle 1 und ein Ritzel 2 eine im Gehäuse G mittels eines Kugellagers 3 gelagerte, außen mit einer Verzahnung versehene, Kupplungshälfte 4 an. In der Kupplungshälfte 4 ist eine Vorgelegewelle 5 gelagert, deren anderes Ende im Gehäuse G gelagert ist. Dort besitzt die Vorgelegewelle 5 eine Schrägverzahnung 6, in die ein Abtriebszahnrad 7 eingreift, das über eine Passfeder 8 eine Abtriebswelle 9 antreibt. Abweichend vom Ausführungsbeispiel kann auch die Vorgelegewelle 5 selbst als Abtriebswelle dienen, wobei dann die Zähne der Schrägverzahnung 6 als Kupplungselement für den weiteren Abtrieb dienen. Etwa in der Mitte der Vorgelegewelle 5 befindet sich ein Bund 10, in dem sich eine Ausnehmung oder Eindrehung 12 befindet. Die Vorgelegewelle 5 ist über eine Passfeder 11 drehfest mit dem Kupplungsträger 15 verbunden, wobei jedoch diese Verbindung eine begrenzte Axialverschiebung zwischen der Vorgelegewelle 5 und dem Kupplungsträger 15 erlaubt. Die Vorgelegewelle 5 kann zur Bedienung und Betätigung der Kupplung durch mit 14 bezeichnete Organe, die an entsprechende Gestänge angeschlossen sind, betätigt werden, insbesondere von der Außenseite des Gehäuses. So kann beispielsweise die Vorgelegewelle 5 über das Organ 14 von Hand zum Einkuppeln in Richtung R bewegt werden. Auf dem Bund 10 der Welle 5 ist der Kupplungsträger 15 durch eine Nut 16, in welche die Passfeder eingreift, gegen Verdrehung gesichert, aber auf dem Bund 10 längsverschieblich. In einem Schlitz 17 (Figur 2) des Kupplungsträgers 15 ist auf einem Bolzen 18 ein Hebel 19 gelagert. Der Hebel 19 wird durch die Feder 20 in radialer Richtung in die Ausnehmung 12 der Vorgelegewelle 5 gedrückt. Die Feder 20 wird durch einen Sprengring 21 gehalten. Desweiteren weist der Kupplungsträger 15 eine Ausnehmung 22 (Figur 4) auf, die die Kraft aus dem Drehmoment vor dem Abschalten aufnimmt. Über das Kugellager 23, das einerseits fest auf dem Kupplungsträger 15 sitzt, wird die zweite Kupplungshälfte 24 gelagert und mit ihrem Bund 25 (Figur 3) gegen axiale Verschiebung am Kugellager gehalten. Im Ausführungsbeispiel ist die Kupplung eine Konuskupplung mit einem mit 26 bezeichneten Konus, wobei es sich beim Kupplungsteil 24 um einen Außenkonus und am Kupplungsteil 4 um einen Innenkonus handelt. Abweichend von der wegen ihrer Unkompliziertheit und Zweckmäßigkeit bevorzugten Konuskupplung können auch andere Formen einer schaltbaren Kupplung verwendet werden.

Zur Übertragung der Axialkräfte kann anstelle des reibungsarmen Kugellagers 23 auch ein in der Zeichnung nicht dargestelltes elastisches Glied verwendet werden, beispielsweise ein weitgehend reibungsfrei arbeitender Gummiring. Diese Lager können entfallen, wenn die Feder 29 so ausgebildet ist, daß sie Axialkräfte elastisch aufnehmen kann und hier zu auch entsprechend dimensioniert ist. Dann können die Axialkräfte über einen am Kupplungsträger 15 angeordneten Bund 27 (Figur 3) übertragen werden und das Kugellager 23 bzw. das dieses ersetzende elastische Glied können entfallen. In diesem Falle ist es allerdings zweckmäßig, statt einer Feder 29 mindestens zwei solcher Federn vorzusehen, um einseitige Kraftwirkungen zu vermeiden.

Die Kupplung wird durch eine Tellerfeder 28 in der geöffneten Stellung gehalten.

An der Kupplungshälfte 24 ist eine Feder, also ein elastisches Glied angebracht, bei der es sich im Ausführungsbeispiel um eine Biegeblattfeder 29 handelt. Diese Feder wird dadurch hergestellt, daß der mit 24 a (Figur 3) bezeichnete Ring der Kupplungshälfte 24 durch einen Einschnitt 30 bis BB (Figur 4) seitlich vom Ring 24 a getrennt wird und durch Längseinschneiden an der Stelle C die Kreisblattfeder 29 entsteht. An dem einen Ende der Feder 29 ist eine Gewindebohrung angebracht, welche eine Einstellschraube 31 aufnimmt. Die Schraube weist am unteren Ende Anflächungen 32 auf, die sich an der Ausnehmung 22 abstützen können zur Übertragung des Drehmomentes. Bei entsprechendem Anzug der Schraube 31 kann die Feder 29 radial vorgespannt werden. Im Ring 24 a ist eine Bohrung 33 vorgesehen, in die der Hebel 19 mit etwa Spiel eingreift.

Im folgenden ist die Funktion der Kupplung beschrieben.

Zunächst wird bei geöffneter Kupplung die Kupplungshälfte 4 durch einen nicht dargestellten Motor über die Motorwelle 1 und das Ritzel 2 in Drehung versetzt. Da die Feder 28 die Konuskupplung offenhält, dreht sich die Vorgelegewelle 5 mit allen daran befindlichen Teilen nicht mit. Wenn allerdings das Organ 14, beispielsweise durch einen mit ihm verbundenen Handhebel in der Ausnehmung 13 in Richtung des Pfeiles R axial verschoben wird, so wird, da der Hebel 19 sich an der Ausnehmung 12 anlegt, der Kupplungträger 15 und somit über das Lager 23 die Kupplungshälfte 24 mit der Kupplungshälfte 4 in Eingriff gebracht. Die Drehung der Kupplungshälfte 4 wird nun auf die Vorgelegewelle 5 durch die Passfeder 11 übertragen und das in die Schrägverzahnung 6 eingreifende Abtriebszahnrad 7 treibt über die Passfeder 8 die Abtriebswelle 9 an, die wiederum, je nach Bedarf, zum Beispiel eine Spindel für die Erzeugung einer Axialbewegung oder einen Schraubendreher für das Andrehen von Schrauben oder andere Werkzeuge betätigt.

Wenn die Kupplung automatisch abschalten soll, weil das erforderliche und vorbestimmte Drehmoment oder die Grenzkraft erreicht ist, so wird aufgrund der tangentialen Umfangskraft an der Schraubenanflächung 32 bei Abstützung an der Ausnehmung 22 die Ringfeder 29 weiter aufgebogen mit der Folge, daß die Abflächung 32 so weit angehoben wird, daß sie sich über die Kante der Ausnehmung 22 erhebt und über die Ausnehmung hüpft oder ratscht. Damit das Drehmoment trotz der Axialkraft durch die Schrägverzahnung 6 bzw. durch die in Richtung R wirkende Handkraft keine störenden Kräfte bei der Übertragung des Drehmoments von den Reib- bzw. Konusflächen 26 über die Kupplungshälfte 24 und den daran anschließenden Ring 24 a ausübt, der in Fortsetzung in die Feder 29 übergeht, ist das reibungsarme Kugellager oder Gummi- oder Gleitlager zum Abfangen der Axial- und sonstigen Störkräfte eingebaut, wobei allerdings das Kugellager 23 bevorzugt wird.

Für das genaue Ansprechen der Kupplung ist es weiterhin erforderlich, daß im Betrieb auftretende Ungleichförmigkeiten abgedämpft werden, die am Antrieb, am Abtrieb oder durch die Getrieberäder selbst hervorgerufen werden, sei es, daß es sich um axialwirkende Momente handelt oder um Veränderungen des Drehmomentes. Zum Ausgleich dieser Ungleichförmigkeiten können zwar Dämpfungsglieder oder sonstige elastische Teile verwendet werden, die insbesondere im Bereich des Antriebes oder Abtriebes angeordnet sind, wozu jedoch erhebliche Kosten aufgewendet werden müssen. Bei der Kupplung gemäß der Erfindung erfolgt diese Dämpfung durch die Feder 29. Die kraftschlüssige Verbindung zwischen der Feder 29 und der Kupplungshälfte 15 wird tatsächlich erst dann gelöst, wenn ein bestimmtes Drehmoment bzw. eine bestimmte Grenzkraft überschritten wird. Eine Aufaddierung vorangegangener Einflüsse, die danach vorzeitig zur Auslösung führt, findet nicht statt.

Dies ist insbesondere darauf zurückzuführen, daß, nachdem die Drehmomentabschaltung durch Darüberratschen der Fläche 32 an der Ausnehmung 22 stattgefunden hat, das Drehmoment bis auf einen kleinen Reibwert zusammenbricht, der durch die Reibung der Schraube 31 am Außenumfang des Kupplungsträgers 15 verursacht wird. Die Kupplung mit den konusförmigen Reibflächen 26 ist aber immer noch eingekuppelt. Erst wenn die Schraubenfläche 32 einen kleinen Weg am Außenumfang des Kupplungsträgers 15 zurückgelegt und sich gegenüber diesem verdreht hat und damit gleichzeitig sich die Bohrung 33, die mit der Kupplungshälfte 24 verbunden ist, sich relativ zum Kupplungsträger 15 verdreht und damit auch den Hebel 19 bewegt, wird diese Bohrung den Hebel 19 mitnehmen. Diese Mitnahme hat zur Folge und erfolgt solange, bis der Hebel 19 durch Drehung um den Bolzen 18 aus der Ausnehmung 12 der Vorgelegewelle 5 hinausgeschwenkt wird.

Nachdem dies erfolgt ist, kann keine Axialkraft mehr durch die Vorgelegewelle 5 über den Kupplungsträger 15, das Kugellager 23 und die zweite Kupplungshälfte 24 auf die Konus- oder Reibflächen 26 übertragen werden. Die Kupplung ist abgeschaltet.

Damit die Vorgelegewelle 5 sich nicht zu weit in Richtung R verschieben kann, schlägt der Bund 1o an der Kupplungshälfte 4 an.

Da im Abtrieb und in der Vorgelegewelle 5 nun kein Drehmoment und auch keine Axialkraft über die Schrägverzahnung 6 mehr vorhanden sind, kann durch leichte Kraft am Organ 14 in der dem Pfeil R entgegengesetzten Richtung die Vorgelegewelle 5 so weit verschoben werden, daß der Hebel 19 wieder in die Ausnehmung 12 der Vorgelegewelle 5 unter der Kraft der Feder 2o einrastet. Ebenso rastet die Schraube 31 mit ihren Anflächungen 32 wieder in die Ausnehmung 22 ein. Die Einstellung des vorbestimmten Abschaltzeitpunktes kann durch Verdrehen der Einstellschraube 31 erfolgen. Außerdem kann im Bereich der Schraube 31 eine Rückholfeder angeordnet sein, die die Wirkung der Feder 29 beeinflußt.

Bei der Verwendung der Kupplung gemäß der Erfindung zwischen dem Antriebsmotor und der Werkzeugseite kann der Antriebsmotor ständig durchlaufen, ohne daß er vor oder zwischen den einzelnen werkzeugseitigen Arbeitsgängen abgeschaltet werden müßte. Hierdurch kann die Folge der Arbeitsgänge beschleunigt und die Beanspruchung des Antriebsmotors vermindert werden.

**Patentansprüche**

1. Schaltbare und selbsttätig abschaltende Überlastkupplung, insbesondere für Handwerkzeuge zum Pressen, Schneiden oder dergleichen, wobei die Kupplung eine Reibungskupplung ist und zwei Kupplungshälften (24, 4) aufweist, von denen die eine relativ zur anderen gegen Federwirkung verschieblich ist und mit der anderen gekuppelt werden kann mit einer Grenzlastsicherung, die bei Auslösen bei Grenzlast eine Axialverschiebung der Kupplungshälften gegeneinander ermöglicht, **dadurch gekennzeichnet,** daß eine Kupplungshälfte (24) auf einem Kupplungsträger (15) begrenzt drehbar angeordnet ist, wobei an der Kupplungshälfte (24),in deren Umfangsbereich eine oder mehrere Federn (29) angeordnet sind, die in ihrer Ruhestellung mit dem Kupplungsträger (15) in formschlüssiger Verbindung stehen, die bei Erreichen der Grenzlast gelöst wird, so daß die Kupplungshälfte (24) gegenüber dem Kupplungsträger (15) begrenzt drehbar wird und wobei an dem Kupplungsträger (15) oder der Kupplungshälfte (24) eine oder mehrere durch Verdrehen dieser Teile gegeneinander auslösbare Sperren (19) angeordnet sind, die im ausgelösten Zustand die Trennung der Kupplungshälften (24, 4) erlauben.

2. Kupplung nach Anspruch 1, **dadurch gekennzeichnet,** daß die Federn (29) als Biegeblattfedern ausgebildet und in radialer Richtung zur Kupplungsachse elastisch verformbar sind.

3. Kupplung nach Anspruch 2, **dadurch gekennzeichnet,** daß die Federn (29) die Form von Hohlzylinder-Segmenten aufweisen.

4. Kupplung nach einem oder mehreren der Ansprüche 1 bis 3, **dadurch gekennzeichnet,** daß die Federn (29) einstückig mit der Kupplungshälfte (24) sind.

5. Kupplung nach einem oder mehreren der Ansprüche 1 bis 4, **dadurch gekennzeichnet,** daß die Federn (29) in Achsrichtung der Kupplung elastisch verformbar sind.

6. Kupplung nach einem oder mehreren der Ansprüche 1 bis 5, **dadurch gekennzeichnet,** daß zwischen Kupplungshälfte (24) und Kupplungsträger (15) ein Kugellager (23) angeordnet ist.

7. Kupplung nach einem oder mehreren der Ansprüche 1 bis 6, **dadurch gekennzeichnet,** daß an der Feder (29) ein sich in axialer Richtung erstreckendes Widerlager (31, 32) angeordnet ist, das mit einer oder mehreren Ausnehmungen (22) auf dem Umfang des Kupplungsträgers (15) zusammenwirkt.

8. Kupplung nach einem oder mehreren der Ansprüche 1 bis 7, **dadurch gekennzeichnet,** daß als Sperren am Kupplungsträger (15) schwenkbar befestigte Hebel (19) dienen, die mit einer Ausnehmung (12) mit der den Kupplungsträger (15) tragenden Welle (5) zusammenwirken und deren freie Enden sich in Bohrungen (33) auf dem Umfang der Kupplungshälfte (24) erstrecken.

**Claims**

1. An engaging and disengaging, automatically disengaging overload coupling, particularly for hand tools for pressing, cutting and the like, wherein the coupling is a friction coupling and has two coupling halves (24, 4) of which one is movable relative to the other against a spring action and can be coupled to the other via a load limiting safety device which on being triggered at the limiting load facilitates an axial displacement of the coupling halves against each other, characterised in that one coupling half (24) is disposed so that it is restrictedly rotatable on a coupling support (15), wherein one or more springs (29) are disposed on the coupling half (24) in its peripheral region, which springs are attached with a positive fit in their rest position to the coupling support (15), which attachment is released on reaching the limiting load so that the coupling half (24) becomes restrictedly rotatable in relation to the coupling support (15), and wherein one or more interlocks (19), which can be tripped by the twisting of these parts against each other, are disposed on the coupling support (15) or the coupling half (24), which interlocks in their triggered state permit the separation of the coupling halves (24, 4).

2. A coupling according to Claim 1, characterised in that the springs (29) are formed as bending leaf springs and can deform elastically in the radial direction towards the coupling axis.

3. A coupling according to Claim 2, characterised in that the springs (29) have the form of segments of hollow cylinders.

4. A coupling according to one or more of Claims 1 to 3, characterised in that the springs (29) are in one piece with the coupling half (24).

5. A coupling according to one or more of Claims 1 to 4, characterised in that the springs (29) can deform elastically in the axial direction of the coupling.

6. A coupling according to one or more of Claims 1 to 5, characterised in that a ball bearing (23) is disposed between the coupling half (24) and the coupling support (15).

7. A coupling according to one or more of Claims 1 to 6, characterised in that an abutment (31, 32) extending in the axial direction is disposed on the spring (29), which abutment interacts with one or more recesses (22) at the periphery of the coupling support (15).

8. A coupling according to one or more of Claims 1 to 7, characterised in that levers (19) which are fastened to the coupling support (15) so that they can swivel serve as interlocks, which levers interact with a recess (12) in the shaft (5) carrying the coupling support (15), and the free ends of which levers extend in holes (33) at the periphery of the coupling half (24).

## Revendications

1. Accouplement à surcharge qui peut être embrayé et qui se débraye automatiquement, en particulier pour des outils à main destinés à serrer ou à découper ou similaires, l'accouplement étant un accouplement par friction qui comporte deux moitiés d'accouplement (4, 24) dont l'une peut être déplacée par rapport à l'autre à l'encontre de l'action d'un ressort en pouvant être accouplée à l'autre, et qui comprend une sécurité à charge limite qui, lors de son déclenchement en présence de la charge limite, permet un déplacement axial des moitiés d'accouplement l'une par rapport à l'autre, caractérisé par le fait qu'une moitié d'accouplement (24) est disposée sur un porte-accouplement (15) en pouvant tourner d'une manière limitée, cependant que sur la moitié d'accouplement (24), dans la région du pourtour de celle-ci, est disposé ou sont disposés un ou plusieurs ressorts (29) qui, dans leur position de repos, présentent avec le porte-accouplement (15) une liaison par conjugaison des formes, laquelle se libère lorsque la charge limite est atteinte, de sorte que la moitié d'accouplement (24) peut tourner d'une manière limitée par rapport au porte-accouplement (15), et qu'est disposé ou que sont disposés sur le porte-accouplement (15) ou sur la moitié d'accouplement (24) ou un ou plusieurs verrous (19) qui peuvent être ouverts par rotation de ces pièces l'une par rapport à l'autre et qui, dans l'état ouvert, permettent la séparation des moitiés d'accouplement (24, 4).

2. Accouplement selon la revendication 1, caractérisé par le fait que les ressorts (29) sont réalisés sous la forme de ressorts à lame flexible, et qu'ils peuvent être déformés élastiquement dans la direction radiale par rapport à l'axe de l'accouplement.

3. Accouplement selon la revendication 2, caractérisé par le fait que les ressorts (29) présentent la forme de portions d'un cylindre creux

4. Accouplement selon une ou plusieurs des revendications 1 à 3, caractérisé par le fait que les ressorts (29) sont d'un seul tenant avec la moitié d'accouplement (24).

5. Accouplement selon une ou plusieurs des revendications 1 à 4, caractérisé par le fait que les ressorts (29) peuvent être déformés élastiquement dans la direction de l'axe de l'accouplement.

6. Accouplement selon une ou plusieurs des revendications 1 à 5, caractérisé par le fait qu'un palier à billes (23) est disposé entre la moitié d'accouplement (24) et le porte-accouplement (15).

7. Accouplement selon une ou plusieurs des revendications 1 à 6, caractérisé par le fait qu'est disposée sur le ressort (29) une butée (31, 32) qui s'étend dans la direction axiale et qui coopère avec un ou plusieurs évidements (22) ménagés sur le pourtour du porte-accouplement (15).

8. Accouplement selon une ou plusieurs des revendications 1 à 7, caractérisé par le fait que l'on utilise comme verrous des leviers (19) qui sont fixés d'une manière pivotante sur le porte-accouplement (15), qui coopèrent par un évidement (12) avec l'arbre (5) portant le porte-accouplement (15) et dont les extrémités libres s'étendent dans des perçages (33) ménagés sur le pourtour de la moitié d'accouplement (24).

Fig.1

Fig. 2

Fig. 3

EP 0 233 508 B1

Fig. 4

EP 0 233 508 B1